# EUROPÄISCHE PATENTSCHRIFT

(11) **EP 0 728 962 B1**
(45) Veröffentlichungstag und Bekanntmachung des Hinweises auf die Patenterteilung: **17.05.2000**
(21) Anmeldenummer: 96102047.6
(22) Anmeldetag: 13.02.1996
(51) Int. Cl.: F16H 47/04

(54) **Hydrostatisch-mechanisches Leistungsverzweigungsgetriebe**
Hydromechanical power transmission
Transmission mécanique-hydrostatique

(30) Priorität: 22.02.1995 DE 19506062
(43) Veröffentlichungstag der Anmeldung: 28.08.1996
(73) Patentinhaber: DEERE & COMPANY, Moline, Illinois 61265-8098 (US); ZF FRIEDRICHSHAFEN AG, 88038 Friedrichshafen (DE)
(72) Erfinder: Otten, Uli, D-67346 Speyer (DE)
(74) Vertreter: Feldmann, Bernhard

(56) Entgegenhaltungen:
- EP-A- 0 465 752
- EP-A- 0 577 282
- DE-A- 3 533 193
- DE-A- 4 127 266
- DE-A- 4 401 509
- GB-A- 2 049 843

## Beschreibung

Die Erfindung betrifft ein hydrostatisch-mechanisches Leistungsverzweigungsgetriebe mit stufenlos veränderlichem Übersetzungsverhältnis für Kraftfahrzeuge, insbesondere für landwirtschaftliche und andere Nutzfahrzeuge gemäß den Merkmalen des Oberbegriffs des Patentanspruchs 1.

Um den hohen Anforderungen an kleine Verlustleistungen bei stufenlosen Getriebekomponenten gerecht zu werden, finden hydrostatisch-mechanische Getriebe mit Leistungsverzweigung zunehmend Interesse. Bei diesen Getrieben wird die Leistung des Fahrzeugmotors, beispielsweise einer Verbrennungskraftmaschine, zunächst in einen hydrostatischen Zweig und einen mechanischen Zweig geteilt, Drehzahlen und Drehmoment gewandelt und dann wieder zusammengeführt und überlagert. Im hydrostatischen Zweig ist eine stufenlose Wandlung der Drehzahl mit entsprechendem Drehmoment möglich, welche dann von einer konstanten Drehzahl mit zugehörigem Drehmoment des mechanischen Zweigs überlagert wird. Dies führt bei entsprechender Stufung im mechanischen Zweig zu einer stufenlosen Regelung von Drehzahl und Drehmoment mit einer Übersetzung von ca. 0,3 bis unendlich. Wegen der einstellbaren Übersetzung von unendlich kann bei diesem Konzept die Anfahrkupplung im Fahrzeugantriebsstrang entfallen.

Ein stufenloses hydromechanisches Verzweigungsgetriebe für Kraftfahrzeuge mit den gattungsbildenden Merkmalen ist aus der DE-A-35 33 193, Fig. 8 bekannt. Dieses Getriebe weist eine durch den Fahrzeugmotor antreibbare Hydrostateinheit und ein durch den Fahrzeugmotor und die Hydrostateinheit antreibbares, auf der Mittellinie der Motorausgangswelle angeordnetes Summierungsgetriebe mit nachgeordnetem Planetengetriebe auf, deren Komponenten durch Kupplungen miteinander verknüpfbar sind. Die Hydrostateinheit ist zur Motorausgangswelle achsversetzt und über der Planetenwalze angeordnet. Die Getriebeantriebs- und -abtriebswelle fluchten miteinander. Das bekannte Verzweigungsgetriebe ist für PKW's vorgesehen.

Aus der DE-A-36 24 989 geht ein Leistungsverzweigungsgetriebe mit hydraulischen und mechanischen Komponenten zum Antrieb von Kraftfahrzeugen hervor. Das Getriebe enthält mindestens zwei Hydrostatmaschinen, die mit einem Steuer- und Verbindungsblock als vormontierbare Einheit fest miteinander verbunden sind. Die vormontierbare Einheit, ein Planetengetriebe, Kupplungen und ein Schaltgetriebe mit einer Zwischenwelle sind gesamtheitlich in einem Gehäuse angeordnet, wobei die verschiedenen Elemente von dem Gehäuse in kurzem Abstand umgeben sind. Durch die Anordnung soll eine montagefreundliche Getriebeeinheit mit minimalem Geräuschpegel und kleinstem Raumbedarf geschaffen werden. Um den Platzbedarf weiter zu vermindern wird vorgeschlagen, die Hydrostatmaschinen in der Einbaulänge des Planetengetriebes achsparallel zu diesem anzubringen. Ferner sollen die Verbindungslinien der Achsen von Hydrostatmaschinen und Planetengetriebe ein Dreieck bilden, wobei sich die Achsen in paralleler Zuordnung befinden. Hierzu sind entsprechend der Darstellung eines Ausführungsbeispiels zwei Hydrostatmaschinen seitlich neben dem Planetengetriebe und etwas tiefer als dieses angeordnet. Auch bei dem in der DE-A-36 24 989 beschriebenen Getriebe fluchtet die Abtriebswelle mit der Getriebeeingangswelle.

Bei Nutzfahrzeugen werden andere Anforderungen an das Getriebe gestellt als bei PKW's. Zum einen muß hier eine höhere Leistungsübertragung gewährleistet sein, andererseits sind die Motorausgangswelle und die Differentialantriebswelle meist durch einen für das Fahrzeug charakteristischen Achsabstand zueinander achsversetzt. Wegen der hohen Leistungsübertragung muß Vorsorge zum Abführen der in den Getriebekomponenten anfallenden Verlustleistungen getroffen werden. Namhafte Fahrzeug- und Getriebehersteller befassen sich mit der Entwicklung von Leistungsverzweigungsgetrieben für Nutzfahrzeuge. Es wurde beispielsweise ein Antriebssystem vorgeschlagen, bei dem an die Motorausgangswelle eine Getriebeeingangswelle gekuppelt ist. Die Getriebeeingangswelle treibt einerseits über einen ersten Getriebezug eine schräg über ihr angeordnete Hydrostateinheit und andererseits über einen zweiten Getriebezug ein Planetengetriebe an, welches ein Summierungsgetriebe und Übersetzungsgetriebe umfaßt, räumlich unter der Getriebeeingangswelle angeordnet ist und im Ölsumpf des Antriebssystems liegt. Der Achsabstand zwischen der Motorausgangswelle und dem Planetengetriebe ließe sich zwar grundsätzlich durch Anpassung des zweiten Getriebezuges variieren, sein Mindestabstand wird jedoch durch die Auslegung des Planetengetriebes festgelegt. Außerdem muß für jeden Achsabstand die Planetenwalze neu ausgelegt werden. Damit ist das Antriebssystem nicht für beliebige Achsabstände geeignet. Ferner befindet sich das Planetengetriebe unten im Ölsumpf des Antriebssystems, was zu unerwünschten Planschverlusten führt. Die Hydrostateinheit liegt hingegen über dem Ölsumpf, so daß der ausreichenden Kühlung besondere Aufmerksamkeit geschenkt werden muß.

Die DE-A-38 25 409 zeigt und beschreibt eine Antriebseinheit für ein geländegängiges Radfahrzeug mit einem Antriebsmotor, einemhydrostatisch-mechanischenLeistungsverzweigungsgetriebe und einem Differential. Das Leistungsverzweigungsgetriebe enthält ein Planetendifferentialgetriebe, ein auf einer Nebenwelle angeordnetes Schaltgetriebe mit Schaltkupplungen und wenigstens zwei Hydrowandler. Um den Gesamtwandlungsbereich des Antriebsstranges zu erhöhen, ist dem Leistungsverzweigungsgetriebe ein Zusatzgetriebe mit zwei wahlweise über je eine schaltbare Kupplung aktivierbaren Übersetzungen nachgeordnet. Durch die Verwendung einer Nebenwelle erhöht sich die radiale Erstreckung des Leistungsverzweigungsgetriebes, was sich bei einer Getriebeauslegung nachteilig auf den Mindestachsabstand zwischen der Motorausgangswelle und der Ausgangswelle der Antriebseinheit auswirken kann. Probleme des Achsabstands zwischen Motorausgangswelle und Differentialantriebswelle, des Wirkungsgrades und der Kühlung sind in der DE-A-38 25 409 nicht angesprochen.

Des weiteren ist aus der EP-A-0 465 752 ein stufenloses Getriebe mit einem auf der Motorausgangswelle angeordneten Planetensatz und einem tieferliegenden von dem Verbrennungsmotor angetriebenen hydrostatischen Getriebe bekannt geworden. An die Ausgangswelle des als Summengetriebe ausgebildeten Planetensatzes schließt sich ein mechanisches Schaltgetriebe mit mehreren Vorwärts- und Rückwärtsgängen an. Die Getriebeausgangswelle ist zur Motorausgangswelle versetzt. Dieses bekannte Getriebe beansprucht einen relativ großen Bauraum.

Die Entwicklung stufenloser hydromechanischer Getriebe erfordert einen hohen Kostenaufwand für Konstruktion, Prototypenfertigung, Testreihen und Serienfertigung. Zur Begrenzung des Investitionsaufwandes ist es zweckmäßig, Getriebe zu entwickeln, die sich ohne grundlegende Änderungen für Antriebsstränge unterschiedlicher Fahrzeuge eignen. Es wäre daher von Vorteil, hydrostatisch leistungsverzweigte Getriebe zu entwikkeln, deren Achsabstände und Ausgangsübersetzung (Endübersetzung) sich durch einfache Mittel in weiten Grenzen variieren lassen.

Die der Erfindung zugrunde liegende Aufgabe wird darin gesehen, ein Leistungsverzweigungsgetriebe der eingangs genannten Art anzugeben, durch das die geschilderten Probleme und Nachteile überwunden werden. Insbesondere soll es den Anforderungsprofilen für unterschiedliche Antriebssysteme, beispielsweise auch verschiedener Fahrzeughersteller genügen, einen hohen Wirkungsgrad auch bei hohen Drehzahlen aufweisen und eine optimale Kühlung der Hydrostateinheit erlauben.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Im Unterschied zu dem genannten Leistungsverzweigungsgetriebe für Nutzfahrzeuge schlägt die Erfindung vor, die Planetenwalze auf der Mittellinie der Motorausgangswelle anzuordnen, so daß die Eingangswellen und Ausgangswellen der Planetenwalze axial zur Motorausgangswelle ausgerichtet sind, während die Eingangswelle und die Ausgangswelle der Hydrostateinheit sowie die Getriebeausgangswelle achsversetzt zur Planetenwalze liegen. Die Planetenwalze liegt damit oberhalb des Ölspiegels im Antriebssystem, so daß ihre drehenden Teile nicht in den Sumpf eintauchen. Die Folge sind geringe Verlustleistungen auch bei hohen Drehzahlen der Planetenwalze. Die Planetenwalze besteht aus einem Summierungsgetriebe und einer Anzahl weiterer Planetengetriebe, die hintereinander geschaltet und deren Komponenten für die Umschaltung zwischen unterschiedlichen Übersetzungsverhältnissen durch Kupplungen und Bremsen miteinander verknüpfbar sind.

Erfindungsgemäß steht die wenigstens eine Ausgangswelle der Planetenwalze über wenigstens einen Getriebezug mit der Getriebeausgangswelle antriebsmäßig in Verbindung. Dies erlaubt es, durch einfachen Austausch von Zahnrädern einen beliebigen Achsabstand und eine beliebige Übersetzung zwischen der Mittellinie des Motors und der Getriebeausgangswelle (beispielsweise Differentialantriebswelle für eine Fahrzeughinterachse) einzustellen, so daß das stufenlose Getriebe mit unveränderter Planetenwalze für Antriebsstränge mit unterschiedlichen Achsabständen verwendet werden kann. Durch die einfache Anpassung der Getriebezüge ist es beispielsweise möglich, die gleiche Antriebseinheit für verschiedene Fahrzeughersteller, die unterschiedliche Anforderungen hinsichtlich Achsabstand und Übersetzung stellen, bereitzustellen, wodurch eine kostengünstige Herstellung der Planetenwalze bei hohen Stückzahlen möglich wird.

Die Hydrostateinheit kann bei der erfindungsgemäßen Lösung grundsätzlich an beliebiger Stelle auf einem Umfangskreis um die Planetenwalze parallel zu dieser angeordnet sein. Vorzugsweise wird sie räumlich nach unten in den Sumpf des Antriebssystems gelegt. Dadurch wird die Hydrostateinheit optimal gekühlt. Diese Maßnahme führt nicht zu Verlustleistungen, weil die gesamte Hydrostateinheit als kompaktes modulares Bauteil ausgebildet sein kann und nach außen keine drehenden Teile aufweist. Es sind lediglich zwei Getriebezüge mit jeweils nur zwei Zahnrädern notwendig, um die Verknüpfung zwischen dem Hydrostat und der Planetenwalze herzustellen. Es können jedoch auch Zwischenräder verwendet werden.

Das erfindungsgemäße Leistungsverzweigungsgetriebe ermöglicht die Aufteilung in klar gegliederte modulare Baugruppen und genügt den Anforderungsprofilen verschiedener Fahrzeughersteller, auch wenn diese Anforderungsprofile hinsichtlich bestehender Getriebekonzepte (z. B. Achsabstand, Übersetzung des Differentials, Übersetzung des Endantriebs und der Endgeschwindigkeit des Fahrzeugs), Fertigung und Montage für verschiedene Fahrzeughersteller sehr unterschiedlich sind.

Des weiteren erstreckt sich gemäß der Erfindung axial durch die Planetenwalze eine vom Fahrzeugmotor angetriebene und mit der Motorachse fluchtende Zentralwelle, die mit einem Nebenantrieb, beispielsweise zum Antrieb der Zapfwelle eines Traktors, antriebsmäßig verbindbar ist. Zusätzlich oder alternativ hierzu kann das hinsichtlich des Fahrzeugmotors hinter der Planetenwalze liegende Ende der Zentralwelle einen Getriebezug betätigen, der die Hydrostateinheit antreibt.

Ferner kann die wenigstens eine Ausgangswelle der Planetenwalze als Hohlwelle ausgebildet sein.

Die zwischen der Planetenwalze und der Ausgangswelle angeordneten Getriebezüge können als ein Zwischengetriebe ausgebildet sein, welches als gesondertes Getriebemodul in einem separaten Gehäuse untergebracht ist und eine Vorwärts-, Rückwärtseinheit enthält, die auf die Anforderungen des Fahrzeugherstellers angepaßt ist und eine Umschaltung der Drehrichtung und/oder des Übertragungsverhältnisses ermöglicht. Zur Umschaltung können Lamellen- oder Klauenkupplungen vorgesehen sein.

Einer weiteren Ausgestaltung der Erfindung zufolge ist die Ausgangswelle der Hydrostateinheit über einen Getriebezug mit einer dem Fahrzeugmotor zugewandten Eingangswelle der Planetenwalze verbindbar, so daß die Ausgangsdrehzahl und das Ausgangsdrehmoment der Hydrostateinheit unmittelbar auf die als Hohlwelle ausgebildete Eingangswelle der Planetenwalze geleitet wird.

Eine alternative Ausgestaltung der Erfindung sieht vor, daß eine Eingangswelle und eine Ausgangswelle der Hydrostateinheit koaxial zueinander auf einer Seite der Hydrostateinheit austreten und über Getriebezüge mit der Ausgangswelle des Fahrzeugmotors bzw. einer Eingangswelle der Planetenwalze verbindbar sind. Der einseitige Antrieb und Abtrieb der Hydrostateinheit begünstigt einen modularen Aufbau des Leistungsverzweigungsgetriebes.

Das erfindungsgemäße Leistungsverzweigungsgetriebe ermöglicht einen flexiblen Einsatz in Nutzfahrzeugen. Insbesondere läßt es sich kompakt ausbilden, so daß der erforderliche Raumbedarf für ein Zwischenachsdifferential zur Verfügung steht, auf dessen Einbau aus Platzgründen bisher in der Regel verzichtet werden mußte.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Seitenansicht einer ersten erfindungsgemäßen Getriebeanordnung,
- Fig. 2: die schematische Seitenansicht einer zweiten erfindungsgemäßen Getriebeanordnung und
- Fig. 3: die schematische Stirnansicht einer Getriebeanordnung gemäß Fig. 1.

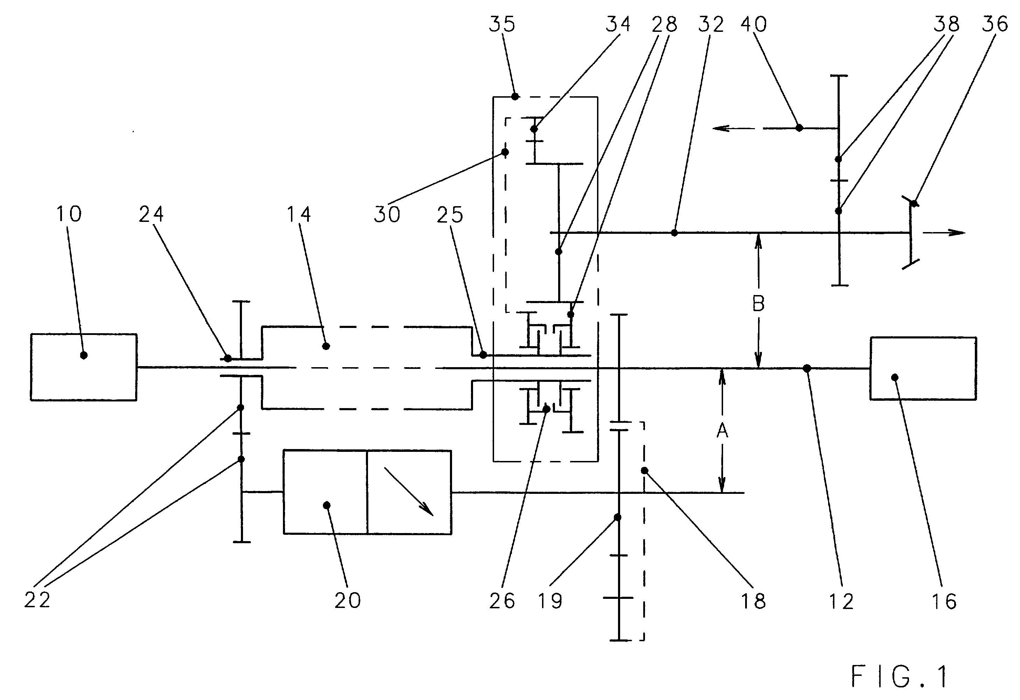

In Fig. 1 ist ein Fahrzeugmotor 10 angedeutet, an die unmittelbar eine mit der Motorachse fluchtende Zentralwelle 12 angeschlossen ist. Die Zentralwelle 12 ersteckt sich axial durch eine Planetenwalze 14 und treibt mit ihrem freien Ende einen Nebenantrieb 16, beispielsweise eine Zapfwelle des Fahrzeugs an.

Die Zentralwelle 12 treibt ferner mit ihrem Bereich, der auf der dem Fahrzeugmotor 10 abgewandten Seite aus der Planetenwalze 14 herausragt, über einen Getriebezug 18 eine Hydrostateinheit 20 an. Der Getriebezug 18 enthält ein zwischen den Zahnrädern der Zentralwelle 12 und der Hydrostateingangswelle ein Zwischenzahnrad 19.

Die Hydrostateinheit enthält in bekannter Weise eine volumenverstellbare und eine volumenkonstante Verdrängermaschine. Die Ausgangswelle der Hydrostateinheit 20 ist über einen weiteren Getriebezug 22 mit der als Hohlwelle ausgebildeten Eingangswelle 24 der Planetenwalze 14 verbunden. Durch eine geeignete Auswahl der Getriebezüge 18 und 22 läßt sich der Abstand A zwischen der Zentralwelle einerseits und der Eingangswelle sowie der Ausgangswelle der Hydrostateinheit andererseits einstellen. Ferner lassen sich durch die Auswahl der Getriebezüge 18 und 22 auch die gewünschten Übersetzungsverhältnisse einstellen.

Die nicht näher dargestellte Planetenwalze 14 enthält in bekannter Weise ein Summierungsplanetengetriebe sowie hintereinander geschaltete weitere Planetensätze für die Umschaltung zwischen unterschiedlichen Übersetzungsverhältnissen des mechanischen Zweigs. Zur Umschaltung sind einige der Getriebekomponenten durch Kupplungen und Bremsen wahlweise miteinander verknüpfbar. Die Ausbildung einer Planetenwalze ist grundsätzlich bekannt und beispielsweise in der DE-A-35 33 193, der DE-A-39 10 410 oder der DE-A-40 21 686 beschrieben.

Die Ausgangswelle 25 der Planetenwalze 14 fluchtet mit ihrer - Eingangswelle 24 und ist ebenfalls als Hohlwelle ausgebildet. Die Ausgangsleistung der Ausgangswelle 25 ist über eine Schaltkupplung 26 wahlweise auf einen der beiden Getriebezüge 28 und 30 übertragbar. Der eine Getriebezug 28 überträgt die Ausgangsdrehzahl und -leistung der Planetenwalze 14 unmittelbar auf eine Getriebeausgangswelle 32, bei der es sich um eine Differentialantriebswelle zum Antrieb der Hinterachse handeln kann. Der andere Getriebezug 30 enthält ein Umkehrrad 34, durch das die Drehrichtung umgekehrt wird, so daß sich ein Rückwärtsgang ergibt. Durch die Auswahl der Zahnräder der beiden Getriebezüge 28 und 30 läßt sich das Übersetzungsverhältnis und der Achsabstand B zwischen der Ausgangswelle 24 der Planetenwalze 14 und der Getriebeausgangswelle 32 in weiten Bereichen an die geforderten Getriebe-Ausgangsbedingungen anpassen. Die beiden Getriebezüge 28 und 30 können in einer gesonderten Getriebeeinheit mit einem eigenen Getriebegehäuse als Zwischengetriebe zusammengefaßt werden, was durch die unterbrochene Linie 35 angedeutet wurde.

Die Getriebeausgangswelle 32 trägt ein Kegelrad 36 zum Antrieb eines Hinterachsdifferentials und steht über einen Getriebezug 38 mit einer Vorderantriebswelle 40 in Verbindung. Anstelle des Getriebezuges 38 für den Vorderradantrieb kann ein Zwischenachsdifferential in die Getriebeausgangswelle 32 integriert werden, was jedoch nicht dargestellt wurde.

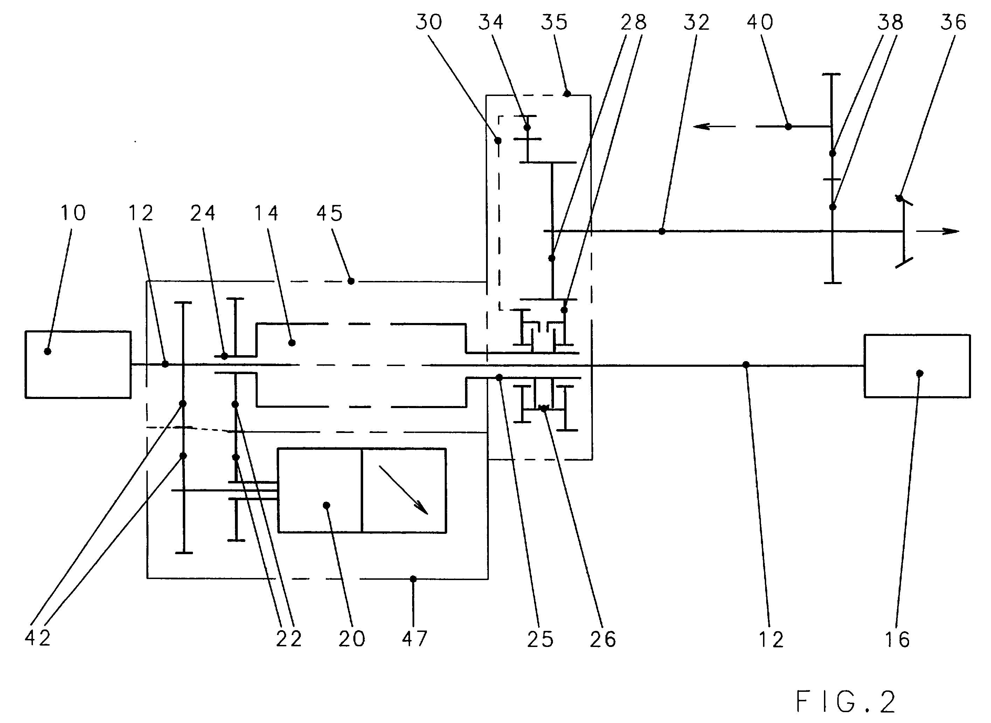

Die Getriebeanordnung der Fig. 2 unterscheidet sich von der in Fig. 1 dargestellten im wesentlichen durch den Antrieb der Hydrostateinheit 20. Für gleichartige Bauelemente wurden daher in den Fig. 1 und 2 die selben Bezugsziffern verwendet. Gemäß Fig. 2 erfolgt der Antrieb der Hydrostateinheit 20 über einen Getriebezug 42, der an der Zentralwelle 12 angreift, und zwar auf der dem Fahrzeugmotor 10 zugewandten Seite der Planetenwalze 14. Auf dieser Seite befindet sich auch der dem Hydrostatabtrieb dienende Getriebezug 22. Der einseitige Austritt der Eingangswelle und der Ausgangswelle der Hydrostateinheit erleichtert die Ausbildung eines modularen Aufbaus der Getriebeanordnung, welcher durch die unterbrochenen Linien 35, 45 und 47 angedeutet ist.

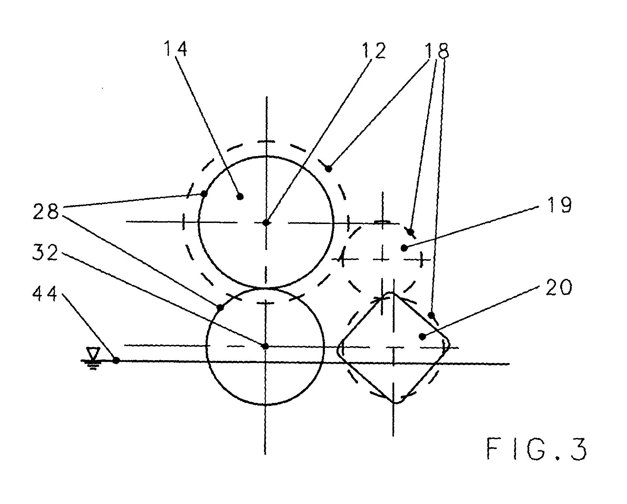

Die Fig. 3 stellt einen Querschnitt durch die Getriebeanordnung der Fig. 1 dar, und zeigt schematisch die Anordnung der Wellen verschiedener Getriebekomponenten relativ zueinander. Die Planetenwalze 14 liegt konzentrisch zur mit der Motorwelle fluchtenden Zentralwelle 12. Senkrecht unter der Zentralwelle 12 verläuft die Getriebeausgangswelle 32. Sie ist über den Getriebezug 28 mit einem Ausgangsrad der Planetenwalze 14 verbunden. In etwa auf gleicher Höhe neben der Ausgangswelle 32 ist die Hydrostateinheit 20 angeordnet. Ihr Eingangszahnrad ist über den gestrichelt gezeichneten Getriebezug, der das Zwischenrad 19 einschließt, mit einem auf der Zentralwelle 12 angeordneten Zahnrad verbunden. Ferner wurde das Ölniveau 44 innerhalb des nicht dargestellten Getriebegehäuses angedeutet.

Aus Fig. 3 ist ersichtlich, daß die Planetenwalze 14 über dem Ölniveau 44 liegt, so daß seine sich drehenden Teile nicht durch Planschverluste gebremst werden. Die Hydrostateinheit 20 taucht hingegen teilweise in den Ölsumpf ein und wird durch das Öl intensiv gekühlt.

## Patentansprüche

1. Hydrostatisch-mechanisches Leistungsverzweigungsgetriebe mit stufenlos veränderlichem Übersetzungsverhältnis für Kraftfahrzeuge, insbesondere für landwirtschaftliche und andere Nutzfahrzeuge, bestehend aus einer durch den Fahrzeugmotor (10) antreibbaren Hydrostateinheit (20) und einer durch den Fahrzeugmotor (10) und die Hydrostateinheit (20) antreibbaren Summierungs- und Übersetzungsgetriebeeinheit, die als auf der Mittellinie der Motorausgangswelle angeordnete Planetenwalze (14) ausgebildet ist und mehrere axial hintereinander geschaltete Planetengetriebe enthält, deren Komponenten durch Kupplungen bzw. Bremsen miteinander und/oder mit wenigstens einer Ausgangswelle (25) der Planetenwalze (14) verknüpfbar sind, wobei die Hydrostateinheit (20) zur Motorausgangswelle achsversetzt und neben der Planetenwalze (14) angeordnet ist, dadurch gekennzeichnet, daß wenigstens eine Ausgangswelle (25) der Planetenwalze (14) über wenigstens einen Getriebezug (28, 30) mit einer zur Motorausgangswelle axial versetzten Getriebeausgangswelle (32) antriebsmäßig in Verbindung steht, daß axial durch die Planetenwalze (14) eine durch den Fahrzeugmotor (10) antreibbare Zentralwelle (12) verläuft, die mit ihrem dem Fahrzeugmotor (10) abgewandten Ende über einen Getriebezug (18) die Hydrostateinheit (20) antreibt und/oder mit einem Nebenantrieb (16), beispielsweise für eine Zapfwelle, antriebsmäßig verbindbar ist, und daß die Hydrostateinheit (20) räumlich tiefer als die Planetenwalze (14) angeordnet ist.

2. Getriebe nach Anspruch 1, dadurch gekennzeichnet, daß ein zwischen der Ausgangswelle (25) der Planetenwalze (14) und der Getriebeausgangswelle (32) angeordnetes Zwischengetriebe (35) vorgesehen ist, das eine Umschaltung der Drehrichtung der Getriebeausgangswelle (32) und/oder eine Umschaltung zwischen unterschiedlichen Übertragungsverhältnissen ermöglicht.

3. Getriebe nach Anspruch 2, dadurch gekennzeichnet, daß das Zwischengetriebe (35) als gesonderte Getriebeeinheit ausgebildet ist, die einen modularen Aufbau mit der Planetenwalze (14) und der Hydrostateinheit (20) ermöglicht.

4. Getriebe nach einem der Ansprüche 1 bis 3, dadurch gekennzeichnet, daß wenigstens eine Ausgangswelle (25) der Planetenwalze (14) als Hohlwelle ausgebildet ist.

5. Getriebe nach einem der Ansprüche 1 bis 4, dadurch gekennzeichnet, daß eine Ausgangswelle der Hydrostateinheit (20) über einen Getriebezug (22) mit einer dem Fahrzeugmotor (10) zugewandten Eingangswelle (24) der Planetenwalze (14) verbindbar ist.

6. Getriebe nach einem der Ansprüche 1 bis 5, dadurch gekennzeichnet, daß eine Eingangswelle und eine Ausgangswelle der Hydrostateinheit (20) koaxial zueinander und auf einer Seite der Hydrostateinheit (20) austreten und über Getriebezüge (22, 42) mit der Ausgangswelle (12) des Fahrzeugmotors (10) bzw. einer Eingangswelle (24) der Planetenwalze (14) verbindbar sind.

7. Getriebe nach einem der Ansprüche 1 bis 6, dadurch gekennzeichnet, daß die Getriebeausgangswelle (32) eine Differentialantriebswelle für die Fahrzeughinterachse ist.

8. Getriebe nach einem der Ansprüche 1 bis 7, dadurch gekennzeichnet, daß die Getriebeausgangswelle (32) über einen Getriebezug (38) mit der Antriebswelle einer weiteren Fahrzeugachse, beispielsweise der Fahrzeugvorderachse antriebsmäßig verbindbar ist.

9. Getriebe nach einem der Ansprüche 1 bis 8, dadurch gekennzeichnet, daß in die Getriebeausgangswelle (32) ein Zwischenachsdifferential integriert ist.

## Claims

1. A hydrostatic-mechanical power division transmission with a steplessly variable transmission ratio, for motor vehicles, especially for agricultural and other commercial vehicles, consisting of a hydrostatic unit (10) which can be driven by the vehicle engine (10) and a summing and transmission gear unit which can be driven by the vehicle engine (10) and the hydrostatic unit (20) and which is formed by planetary drum (14) arranged on the centre line of the engine output shaft and contains a plurality of planetary gears connected axially one after the other, with their components adapted to be connected together and/or to at least one output shaft (25) of the planetary drum (14) by clutches or brakes, wherein the hydrostatic unit (20) is arranged axially offset from the engine output shaft and alongside the planetary drum (14), characterized in that at least one output shaft (25) of the planetary drum (14) is drivably connected through at least one gear train (28, 30) to a transmission output shaft (32) axially offset relative to the engine output shaft, in that a central shaft (12) drivable by the vehicle engine (10) runs axially through the planetary drum (14) and drives the hydrostatic unit (20) from its end remote from the vehicle engine (10) through a gear train (18) and/or can be drivably connected to an auxiliary drive (16), for example for a PTO shaft, and in that the hydrostatic unit (20) is arranged spatially lower than the planetary drum (14).

2. A transmission according to claim 1, characterized in that an intermediate gear (35) is provided between the output shaft (25) of the planetary drum (14) and the transmission output shaft (32) and makes it possible to switch the direction of rotation of the transmission output shaft (32) and/or to shift between different transmission ratios.

3. A transmission according to claim 2, characterized in that the intermediate gear (35) is in the form of a separate gear unit, which makes modular construction with the planetary drum (14) and the hydrostatic unit (20) possible.

4. A transmission according to any of claims 1 to 3, characterized in that at least one output shaft (25) of the planetary drum (14) is formed as a hollow shaft.

5. A transmission according to any of claims I to 4, characterized in that an output shaft of the hydrostatic unit (20) can be connected through a gear train (22) to an input shaft (24) of the planetary drum (14) adjacent the vehicle engine (10).

6. A transmission according to any of claims 1 to 5, characterized in that an input shaft and an output shaft of the hydrostatic unit (20) are coaxial with one another and emerge at one end of the hydrostatic unit (20) and can be connected through gear trains (22, 42) to the output shaft (12) of the vehicle engine (10) and an input shaft (24) of the planetary drum (14) respectively.

7. A transmission according to any of claims 1 to 6, characterized in that the transmission output shaft (32) is a differential axle shaft for the vehicle rear axle.

8. A transmission according to any of claims I to 7, characterized in that the transmission output shaft (32) can be drivably connected through a gear train (38) to the drive shaft of a further vehicle axle, for example the vehicle front axle.

9. A transmission according to any of claims 1 to 8, characterized in that an intermediate axle differential is integrated in the transmission output shaft (32).

## Revendications

1. Transmission hydrostatique-mécanique à répartition de puissance comportant un rapport de démultiplication variable progressivement pour des véhicules automobiles, notamment des véhicules agricoles et d'autres véhicules utilitaires, constituée par une unité hydrostatique (20) pouvant être entraînée par le moteur (10) du véhicule, et une unité de transmission à sommation et démultiplication, qui peut être entraînée par le moteur (10) du véhicule et l'unité hydrostatique (20) et qui est agencée sous la forme d'un cylindre planétaire (14) disposé sur l'axe central de l'arbre de sortie du moteur et contient plusieurs engrenages planétaires montés axialement les uns derrière les autres et dont les composants peuvent être réunis, au moyen d'accouplements ou de freins, entre eux et/ou à au moins un arbre de sortie (25) du cylindre planétaire (14), l'unité hydrostatique (20) étant décalée axialement par rapport à l'arbre de sortie du moteur et étant disposée à côté du cylindre planétaire (14), caractérisée en ce qu'au moins un arbre de sortie (25) du cylindre planétaire (14) est relié selon une liaison motrice, par l'intermédiaire d'au moins un train d'engrenages (28,30), à un arbre de sortie (32) de la transmission, qui est décalé axialement par rapport à l'axe de sortie du moteur, en ce qu'un arbre central (12), qui peut être entraîné par le moteur (10) du véhicule, traverse axialement le cylindre planétaire (14), cet arbre central entraînant, par son extrémité située à l'opposé du moteur (10) du véhicule, l'unité hydrostatique (20) par l'intermédiaire d'un train d'engrenages (18) et/ou pouvant être relié selon une liaison motrice à un dispositif d'entraînement secondaire (16), par exemple pour un arbre de prise directe, et en ce que l'unité hydrostatique (20) est disposée spatialement plus profondément que le cylindre planétaire (14).

2. Transmission selon la revendication 1, caractérisée en ce qu'il est prévu une transmission intermédiaire (35), qui est disposée entre l'arbre de sortie (25) du cylindre planétaire (14) et l'arbre de sortie (32) de la transmission et qui permet une commutation du sens de rotation de l'arbre de sortie (32) de la transmission et/ou une commutation entre des conditions différentes de transmission.

3. Transmission selon la revendication 2, caractérisée en ce que la transmission intermédiaire (35) est agencée sous la forme d'une unité de transmission séparée, qui permet un agencement modulaire avec le cylindre planétaire (14) et l'unité hydrostatique (20).

4. Transmission selon l'une des revendications 1 à 3, caractérisée en ce qu'au moins un arbre de sortie (25) du cylindre planétaire (14) est agencé sous la forme d'un arbre creux.

5. Transmission selon l'une des revendications 1 à 4, caractérisée en ce qu'un arbre de sortie de l'unité hydrostatique (20) peut être relié, par l'intermédiaire d'un train d'engrenages (22) à un arbre d'entrée (24), tourné vers le moteur (10) du véhicule, du cylindre planétaire (14).

6. Transmission selon l'une des revendications 1 à 5, caractérisée en ce qu'un arbre d'entrée et un arbre de sortie de l'unité hydrostatique (20) sortent coaxialement l'un à l'autre et d'un côté de l'unité hydrostatique (20), et peuvent être reliés par l'intermédiaire de trains d'engrenages (22,42) à l'arbre de sortie (12) du moteur (10) du véhicule et à un arbre d'entrée (24) du cylindre planétaire (14).

7. Transmission selon l'une des revendications 1 à 6, caractérisée en ce que l'arbre de sortie (32) de la transmission est un arbre d'entraînement de différentiel pour l'essieu arrière d'un véhicule.

8. Transmission selon l'une des revendications 1 à 7, caractérisée en ce que l'arbre de sortie (32) de la transmission peut être reliée selon une liaison motrice, par l'intermédiaire d'un train d'engrenages (38), à l'arbre d'entraînement d'un autre essieu du véhicule, par exemple l'essieu avant du véhicule.

9. Transmission selon l'une des revendications 1 à 8, caractérisé en ce qu'un différentiel d'essieu intermédiaire est intégré dans l'arbre de sortie (32) de la transmission.
